# EUROPÄISCHE PATENTANMELDUNG

(11) **EP 2 251 685 A1**
(43) Veröffentlichungstag der Anmeldung: **17.11.2010**
(21) Anmeldenummer: 10162613.3
(22) Anmeldetag: 12.05.2010
(51) Int. Cl.: G01N 29/04, G01N 29/22, G01N 29/265, G01N 29/32, G01N 29/44

(54) **Vorrichtung und Verfahren zur Ultraschalluntersuchung**

(30) Priorität: 15.05.2009 DE 102009021586; 30.11.2009 DE 102009047318
(71) Anmelder: intelligeNDT Systems & Services GmbH, 91052 Erlangen (DE)
(72) Erfinder: Engl, Günter, 91052 Erlangen (DE); Mohr, Friedrich, 90482 Nürnberg (DE); Kröning, Michael, 66111 Saarbrücken (DE); Reddy, Krishna Mohan, 600015 Saidapet Chennai (IN)
(74) Vertreter: Mörtel & Höfner

(57) **Zusammenfassung**

Verfahren und Vorrichtung zur Ultraschallprüfung eines Werkstückes (6), bei dem eine Vielzahl von Ultraschallprüfpulsen (12,12') von einer Prüfoberfläche (4) des Werkstückes (6) in dieses eingekoppelt wird, wobei zumindest zwei Ultraschallprüfpulse (12,12') an voneinander um eine entlang der Prüfoberfläche (4) gemessene Prüfschrittweite (18) beabstandeten Einkoppelpunkten (20,20') in das zu prüfende Werkstück (6) eingekoppelt werden, wobei ein einzelner einem in dem Werkstück (6) gelegenen Ortspunkt (22) zugeordneter Messwert (*I̅̅̅*) auf der Basis der den zumindest zwei Ultraschallprüfpulsen (12,12') zugeordneten Empfangssignalen (14,14') berechnet wird.

## Beschreibung

Mit Hilfe von Ultraschall können Fehler bzw. Ungänzen im Volumen und an den Oberflächen von Bauteilen bzw. technischen Komponenten nachgewiesen werden. Ein Vorteil der bei der Ultraschallprüfung bevorzugt eingesetzten Impuls-Echo-Technik ist die hervorragende Nachweisbarkeit von flächigen Trennungen, wie beispielsweise Rissen. Ultraschallprüfungen werden sowohl in der Fertigung als integrierte Prüfung zum Zweck der Qualitätssicherung als auch als wiederkehrende Prüfung im Rahmen von Wartung und Instandhaltung zur Gewährleistung der weiteren Gebrauchseignung des Prüfobjektes eingesetzt.

Zur Durchführung einer Ultraschallprüfung wird ein Ultraschallkopf unter Verwendung eines geeigneten Koppelmediums auf eine Prüfoberfläche eines zu prüfenden Werkstücks gesetzt. An die Beschaffenheit einer solchen Prüfoberfläche werden jedoch besondere Anforderungen gestellt, um eine gleichmäßige Prüfempfindlichkeit und Reproduzierbarkeit der Prüfergebnisse zu gewährleisten. In der Regel schränkt daher das für die Ultraschallprüfung aufgestellte Regelwerk die Oberflächenqualitäten derart ein, dass deren Rauigkeit bzw. Welligkeit in gewissen vorgegebenen Grenzen liegen muss. Insbesondere darf die Oberflächenrauigkeit bzw. -welligkeit nicht zu Spalten zwischen Prüfkopf und Prüfoberfläche führen, die größer als die halbe Wellenlänge der zur Prüfung verwendeten Nennfrequenz sind. Werden diese Bedingungen nicht eingehalten, so wird das zur Prüfung verwendete und in das betreffende Werkstück eingekoppelte Schallfeld in Amplitude und Phase stark beeinträchtigt. Eine regelwerkskonforme Prüfung ist in einem solchen Fall erheblich erschwert, wenn nicht sogar unmöglich. Zusammenfassend ist also bisher die Ultraschallprüfung auf wohldefinierte Oberflächenqualitäten beschränkt.

Um die Regelwerksanforderungen einzuhalten, werden die Prüfoberflächen prüfgerecht vorbereitet. Dies geschieht beispielsweise durch Anschleifen der Oberfläche, so dass deren Rauigkeit anschließend unterhalb eines gewissen Grenzwertes liegt.

Ist eine solche Vorbereitung der Prüfoberfläche nicht möglich oder zu unwirtschaftlich, so können die Prüfvorschriften in gewissen Grenzen an die Oberflächengegebenheiten angepasst werden. Dies geschieht beispielsweise durch die Wahl niedriger Prüffrequenzen, sofern dennoch die geforderte Prüfempfindlichkeit eingehalten werden kann. Letztendlich ist jedoch eine Veränderung des Prüfregelwerkes stets ein Kompromiss zwischen robuster Prüfdurchführung und gutem Fehlernachweisvermögen.

Ähnliche Probleme treten bei Werkstücken mit akustisch anisotropen Beschichtungen auf, z.B. bei geschweißten austenitischen Plattierungen, wie sie im Druckbehälterbau üblich sind. Die Beschichtung beeinflusst auch hier den Schalldurchgang, so dass das Regelwerk ebenso wie bei rauen oder welligen Prüfoberflächen angepasst werden muss. Dies ist jedoch, wie bereits erwähnt, nur in gewissen Grenzen möglich. Außerdem kann durch Optimierung der Schallfeldparameter, z.B. der Fokussierung, Art der Fokussierung, Pulsdauer oder eine geeignete Modenwahl, der Schalldurchgang durch die Beschichtung in gewissen Grenzen stabilisiert werden. In der Regel sind jedoch für die jeweilige Form des Werkstückes entsprechende Prüfnachweise zu erbringen.

In manchen Fällen wird es jedoch generell notwendig sein, zusätzlich zur Ultraschallprüfung mit ergänzenden Techniken nachzuprüfen, z.B. mit einer Wirbelstromprüfung. Dies gilt insbesondere dann, wenn die Prüfbehinderung nur örtlich begrenzt vorliegt. Zusätzliche Prüfmaßnahmen führen jedoch zu erhöhten Prüfkosten bei zwar noch hinreichender, jedoch in der Regel verschlechterter Aussagekraft der Prüfung.

Aufgabe der vorliegenden Erfindung ist es, ein Verfahren und eine Vorrichtung zur Ultraschallprüfung anzugeben, welches bzw. welche gegenüber dem Stand der Technik verbessert ist.

Die Aufgabe wird gemäß der Erfindung gelöst durch ein Verfahren nach Anspruch 1 sowie durch eine Vorrichtung nach Anspruch 13. Vorteilhafte Ausgestaltungen sind Gegenstand der abhängigen Ansprüche.

Bei dem erfindungsgemäßen Verfahren wird eine Vielzahl von Ultraschallprüfpulsen von einer Prüfoberfläche eines Werkstückes in dieses eingekoppelt. Von dieser Vielzahl von Ultraschallprüfpulsen werden zumindest zwei an voneinander beabstandeten Einkoppelpunkten in das zu prüfende Werkstück eingekoppelt. Dabei sind die entsprechenden Einkoppelpunkte um eine entlang der Prüfoberfläche gemessene Prüfschrittweite voneinander entfernt. Einem einzelnen in dem Werkstück gelegenen Ortspunkt wird nun ein einzelner Messwert zugeordnet, der auf denjenigen Empfangssignalen basiert, die den zumindest zwei Ultraschallprüfpulsen zugeordnet sind. Mit anderen Worten wird einem Ortspunkt ein Messwert zugeordnet, der aus zumindest zwei Empfangssignalen berechnet wird. Diese Empfangssignale entstehen durch Reflektion in dem Werkstück und sind den entsprechenden zumindest zwei in das Werkstück eingekoppelten Ultraschallprüfpulsen zugeordnet.

Dem erfindungsgemäßen Verfahren liegt die folgende Erkenntnis zu Grunde:

Bei der Ultraschallprüfung eines Werkstückes mit einer rauen Oberfläche, von der her die zur Prüfung des Werkstückes verwendeten Ultraschallprüfpulse in das Werkstück eingekoppelt werden, auch als Prüfoberfläche bezeichnet, beeinflusst die Rauigkeit der Prüfoberfläche sowohl die Einkopplung als auch die Auskopplung der entsprechenden Ultraschallfelder.

Unter einer rauen Oberfläche ist stets eine solche Oberfläche eines zu prüfenden Werkstückes zu verstehen, die den üblichen, typischerweise im Vorfeld einer Ultraschallprüfung durchgeführten Vorbehandlungen, wie z.B. Schleifen, Polieren, etc. nicht unterzogen wurde. Eine solche raue Oberfläche weist z.B. ein geschmiedetes Werkstück oder Halbzeug auf.

Es wurde erkannt, dass der Einfluss der Rauigkeit der Prüfoberfläche auf das Ergebnis der Ultraschallprüfung in jedem Punkt der Prüfoberfläche geringfügig verschieden ist. Um den Einfluss der Oberflächenrauigkeit auf das Ergebnis der Ultraschallprüfung zu minimieren, werden ein oder mehrere Ultraschallprüfpulse an voneinander verschiedenen Einkoppelpunkten der Prüfoberfläche in das zu prüfende Werkstück eingekoppelt. Die Entfernung zwischen den Einkoppelpunkten ist nun aber so gering gewählt, dass ohne den störenden Einfluss der rauen Oberfläche die erzielten Messdaten eine nahezu gleiche Information über die im Volumen des Prüfkörpers bzw. Werkstücks vorhandenen Reflektoren liefern würden.

Das gemessene Mess- oder Echosignal unterliegt je nach Position des Einkoppelpunktes auf der Prüfoberfläche geringfügig unterschiedlichen Störeinflüssen, die durch die Rauigkeit der Prüfoberfläche bedingt sind. Der eigentliche durch die Lage der Reflektoren im Volumen des Werkstückes bedingte Informationsgehalt der zugehörigen Echosignale ändert sich jedoch nur äußerst geringfügig. Dieser Unterschied im Informationsgehalt kann vernachlässigt werden.

Die durch die Rauigkeit der Prüfoberfläche bedingten Variationen kommen dadurch zustande, dass der Ultraschallprüfkopf mit wechselnder Position auf der Prüfoberfläche stets leicht veränderte lokale Bedingungen vorfindet. Genauer gesagt verändert sich die zwischen dem Ultraschallprüfkopf bzw. einem verwendeten Koppelmedium und der rauen Prüfoberfläche vorhandene Grenzfläche geringfügig. Aufgrund dieser lokalen Veränderung, sind die Bedingungen, unter denen ein Ultraschallprüfpuls eingekoppelt und das Echosignal ausgekoppelt werden von einem zum nächsten Einkoppelpunkt stets geringfügig verschieden.

Es wurde außerdem erkannt, dass die Rauigkeit der Prüfoberfläche das Ergebnis der Ultraschallprüfung stochastisch beeinflusst. Um diesen stochastischen Einfluss der Oberflächenrauigkeit zu minimieren, werden mehrere Echosignale zusammengefasst. Essenziell ist in diesem Zusammenhang, dass die betreffenden Echosignale bzw. Messwerte von solchen Ultraschallprüfpulsen stammen, die an voneinander verschiedenen Einkoppelpunkten in das zu prüfende Werkstück eingeschallt wurden. Die einzelnen Einkoppelpunkte liegen nun aber so eng beieinander, dass zwar die lokalen Einkoppelbedingungen von einem zum nächsten Einkoppelpunkt variieren, die empfangenen Messsignale jedoch ein und demselben Ortspunkt des zu prüfenden Werkstückes zugeordnet werden können.

Auf diese Art und Weise werden an sich redundante Daten gewonnen, welche jedoch einer durch die Oberflächenrauigkeit bedingten Streuung unterliegen. Da der Einfluss der Oberflächenrauigkeit stochastisch ist, kann das Ergebnis der Ultraschallprüfung mit Hilfe statistischer Methoden, im einfachsten Fall einer Mittelwertbildung, vom störenden Einfluss der Oberflächenrauigkeit weitgehend befreit werden.

Vorteilhaft kann somit eine zeit- und kostenintensive Vorbehandlung der Prüfoberfläche entfallen, ohne dass im Gegenzug die Aussagekraft und Qualität der Ultraschallmessung darunter leidet. Dementsprechend ist das erfindungsgemäße Verfahren insbesondere zur Prüfung von Werkstücken mit rauer, unbehandelter Prüfoberfläche geeignet, bzw. erlaubt erstmalig die Ultraschallprüfung derart unbehandelter Werkstücke.

Dem erfindungsgemäßen Verfahren liegt nun außerdem die Erkenntnis zugrunde, dass der modernen Ultraschalltechnik Mittel zur Verfügung stehen, die eine genaue Erfassung der Position des Ultraschallprüfkopfes und eine Verarbeitung der anfallenden großen Datenmengen, idealerweise in Echtzeit, erlauben. Diese Techniken werden nun vorteilhaft zur Entstörung von Ultraschalldaten eingesetzt.

Die Ultraschalltechnik kann somit vorteilhaft in ein neues Anwendungsfeld vorstoßen. Beispielsweise können nun geschmiedete Halbzeuge bei unbehandelter und somit rauer Oberfläche geprüft werden. Dies bringt wesentliche Vorteile bei der Fertigung solcher Komponenten mit sich, da ein Fehlernachweis sehr früh erfolgen kann. Weitere Bearbeitungsprozesse können angepasst werden oder unterbleiben, was die Fertigungsplanung erheblich vereinfacht. Auch bei schweißplattierten Komponenten, die den Schalldurchgang beeinträchtigen, kann die Ultraschallprüfung in Richtung einer regelwerkskonformen Prüfung verbessert werden. Außerdem schafft das erfindungsgemäße Verfahren die Voraussetzungen für die Anwendung tomographischer Techniken.

Gemäß einer ersten Ausführungsform erfolgt die Ultraschallprüfung mit einem auf die Prüfoberfläche aufgesetzten Ultraschallprüfkopf. Die Prüfschrittweite wird dabei kleiner als ein laterales Ortsauflösungsvermögen gewählt, welches durch die Bauform des Ultraschallprüfkopfes sowie durch dessen Betriebsparameter während der Ultraschallprüfung vorgegeben ist. Die Bauform des Ultraschallprüfkopfes kann beispielsweise durch die lateralen Abmessungen des verwendeten Ultraschallwandlers, z.B. eines Piezoelementes, Einfluss auf das laterale Auflösungsvermögen haben. Wird ein Wandlerarray als Ultraschallsender verwendet, so bestimmt neben dessen Größe, d.h. der Abmessungen des gesamten Arrays und der Abstand der einzelnen Wandlerelemente untereinander das Auflösungsvermögen des Ultraschallprüfkopfes. Betriebsparameter, welche das laterale Auflösungsvermögen beeinflussen, sind beispielsweise die Nennfrequenz der zur Prüfung verwendeten Ultraschallpulse oder, im Fall eines Wandlerarrays, die durch phasenverzögerte Ansteuerung der Wandlerelemente eingestellte Fokussierung.

Da nach wie vor die einzelnen Ultraschallprüfpulse an voneinander beabstandeten Einkoppelpunkten der Prüfoberfläche in das zu prüfende Werkstück eingekoppelt werden, variiert der Einfluss der Oberflächenrauigkeit auf die empfangenen Echosignale. Die Prüfschrittweite wird nun jedoch derart klein gewählt, so dass sie unterhalb eines erreichbaren lateralen Auflösungsvermögens liegt. Somit können vorteilhaft mehrere Echosignale zur Bestimmung eines einzelnen Messwertes, welcher einem einzigen in dem Werkstück gelegenen Ortspunkt zugeordnet ist, herangezogen werden, ohne dass die laterale Ortsauflösung des Ultraschallverfahrens abnimmt.

Gemäß einer weiteren Ausführungsform geht der Berechnung des Messwertes eine statistische Auswertung der Empfangssignale voraus. Bei der sich anschließenden Berechnung des Messwertes bleiben diejenigen Empfangssignale unberücksichtigt, die einen im Rahmen der vorherigen statistischen Auswertung bestimmten Grenzwert überschreiten. Vorzugsweise handelt es sich bei diesem Grenzwert um ein Vielfaches, weiterhin vorzugsweise um das Doppelte einer statistischen Standardabweichung der ausgewerteten Empfangssignale. Durch statistische Analyse und anschließende Selektion können die von der Rauigkeit der Prüfoberfläche beeinflussten Empfangssignale entrauscht werden. Dies geschieht, indem statistische Ausreißer, welche außerhalb einer der anhand der übrigen Werte ermittelten Streuungsbreite liegen, unberücksichtigt bleiben. Im Ergebnis wird ein rauscharmes und präziseres Ergebnis erzielt. Da in der Regel sowohl die Amplitude als auch die Phase der Empfangssignale beeinflusst sind, werden bei der Entstörung sowohl die Amplitude als auch die Phase berücksichtigt.

Bei der statistischen Auswertung kann es sich um einfache, an sich bekannte Methoden handeln, falls diese hinreichend sind. Bei komplexer Statistik der durch die raue Oberfläche bedingten Störeinflüsse können darüber hinaus entsprechend geeignete Verfahren, zum Beispiel auf der Basis von Maximum Entropie - Algorithmen zum Einsatz kommen, welche vorzugsweise echtzeitfähig programmiert werden. Die Auswahl der statistischen Methode erfolgt problembezogen.

Außerdem kann eine Kontrolle der gemessenen Statistik der durch die Rauigkeit der Prüfoberfläche oder eine akustisch anisotrope Beschichtung bedingten Störeinflüsse erfolgen, da diese weitere prüftechnisch interessante Informationen enthält. Neben Aussagen über die Prüfoberfläche bzw. die Beschichtung selbst kann anhand einer solchen Auswertung die Prüfdurchführung beurteilt werden. So liefert eine solche Auswertung beispielsweise Daten, die eine Beurteilung der Ankopplung des Prüfkopfes an das zu prüfende Werkstück erlauben.

Gemäß einer weiteren Ausführungsform wird ein zur Ultraschallprüfung vorgesehener Ultraschallprüfkopf zumindest in einer Zeitspanne zwischen der Einkopplung der zumindestens zwei Ultraschallprüfpulse entlang einer Abtastbahn verfahren. Dabei überlappen sich vorzugsweise die in das zu prüfende Werkstück eingekoppelten Ultraschallfelder von aufeinanderfolgenden Ultraschallprüfpulsen. Vorzugsweise beträgt dieser Überlapp zumindest 10%, weiterhin vorzugsweise beträgt der Überlapp 90%.

Zur vollständigen Abdeckung eines Prüfvolumens wird stets ein gewisser Überlapp der Schallfeldbereiche der Ultraschallprüfpulse mit hinreichender Fehlernachweisempfindlichkeit gefordert. Dies gilt insbesondere für die Berechnung des Spurversatzes z.B. bei mäanderförmiger Abtastung der Prüfoberfläche. Indem dieser Überlapp nun mehr oder weniger stark bzw. groß gewählt wird, werden während der Ultraschallprüfung mehr oder weniger redundante Datensätze erzeugt. Dieses "oversampling" dient dazu, die statistische Auswertung der Messwerte zu verbessern. Da stets mehrere Empfangssignale einem einzelnen Ortspunkt des zu prüfenden Werkstückes zugeordnet werden, ist die erreichbare Statistik umso besser, je mehr Datensätze, die auf an unterschiedlichen Einkoppelpunkten eingekoppelten Prüfpulsen basieren, der Berechnung zu Grunde gelegt werden können. Da der modernen Ultraschalltechnik Methoden zur effizienten Echtzeitsignalverarbeitung zur Verfügung stehen, kann ein solches "oversampling" bei vertretbaren Systemkosten realisiert werden.

Gemäß einer weiteren Ausführungsform wird der Messwert basierend auf denjenigen Empfangssignalen berechnet, welche in Abtastrichtung aufeinander folgen. Vorzugsweise wird eine vorgegebene Anzahl von Empfangssignalen zu einem Datenblock zusammengefasst, weiterhin vorzugsweise werden das jeweils aktuelle Empfangssignal und eine vorgegebene Anzahl vorhergehender Empfangssignale zu einem Datenblock zusammengefasst. Gemäß einer Weiterbildung ist die Anzahl derjenigen Empfangssignale, welche zu einem Datenblock zusammengefasst werden, in Abhängigkeit von der Position des Ultraschallprüfkopfes auf der Abtastbahn veränderbar. Die Anzahl der sich mit dem Prüfkopf "mitbewegenden" Messwerte nicht konstant zu halten, kann für manche Anwendungen vorteilhaft sein.

Für die erfindungsgemäße Vorrichtung gelten die im Zusammenhang mit dem Verfahren getroffenen Aussagen hinsichtlich seiner Wirkungen und Vorteile in analoger Weise.

Im Folgenden wird die Erfindung unter Bezugnahme auf die Figuren der Zeichnung näher erläutert. Dabei zeigt deren
Figur 1 einen auf ein Werkstück aufgesetzten Ultraschallprüfkopf,
Figur 2 und 3 jeweils ein A-Bild an voneinander verschiedenen Ortspositionen,
Figur 4 ein aus den A-Bildern der Figuren 2 und 3 berechnetes schematisches B-Bild.
Figur 5a und b zeigen je ein unter Realbedingungen aufgenommenes B-Bild.

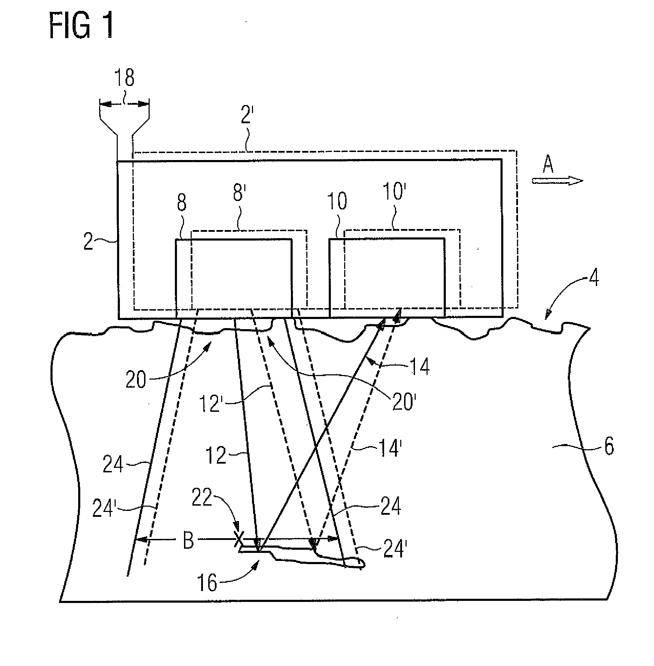

Figur 1 zeigt eine Prüfsituation, in welcher ein Ultraschallprüfkopf 2 auf eine raue Prüfoberfläche 4 eines Werkstückes 6 aufgesetzt ist. Die Prüfsituation ist aus Gründen der Klarheit in einer Richtung senkrecht zur Prüfoberfläche 4 stark verkürzt dargestellt. Genau genommen sind in Figur 1 zwei Prüfsituationen dargestellt. Der mit durchgezogener Linie dargestellte Ultraschallprüfkopf 2 zeigt eine erste, ein weiterer mit gestrichelter Linie dargestellte Ultraschallprüfkopf 2' zeigt eine zweite Prüfsituation. Die erste Prüfsituation betreffende Bezugszeichen sind mit ungestrichenen, die zweite Prüfsituation betreffende Bezugszeichen sind mit gestrichen Bezugszeichen versehen. Ein in der Regel verwendetes Koppelmedium ist in Figur 1 aus Gründen der Übersichtlichkeit nicht dargestellt.

Zunächst soll auf die erste Prüfsituation näher eingegangen werden. Der Ultraschallprüfkopf 2 umfasst ein Sendeelement 8 und ein Empfangselement 10, mit deren Hilfe ein Ultraschallprüfpuls 12 in das Werkstück 6 eingekoppelt und dessen Echo- bzw. Empfangssignal 14 empfangen wird. Bei der Einkopplung des Ultraschallprüfpulses 12 in das Werkstück 6 passiert dieser die raue Prüfoberfläche 4, d.h. die Grenzfläche zwischen dem in Figur 1 nicht dargestellten Koppelmedium und dem Werkstück 6. Die Rauigkeit der Prüfoberfläche 4 beeinflusst den in das Werkstück 6 eingekoppelten Ultraschallprüfpuls 12 hinsichtlich seiner Amplitude und Phase. Gleiches gilt, wenn das an einem in dem Werkstück 6 vorhandenen Fehler 16 reflektierte Empfangssignal 14 das Werkstück 6 verlässt und die raue Prüfoberfläche 4 erneut passiert, diesmal in Richtung des Empfangselementes 10. Nachdem einer oder mehrere Ultraschallprüfpulse 12 in das Werkstück 6 eingekoppelt wurden, wird der Ultraschallprüfkopf 2 von der ersten in die zweite Position verbracht. Dies geschieht, indem der Ultraschallprüfkopf 2 um eine Prüfschrittweite 18 in Richtung einer Abtastbahn A verschoben wird.

In der zweiten Prüfsituation werden wiederum einer oder mehrere Ultraschallprüfpulse 12' in das Werkstück 6 eingekoppelt und entsprechende Empfangssignale 14' empfangen. Durch anschließende erneute Verschiebung kann das Werkstück 6 entlang der Abtastbahn A geprüft werden.

Bei dem Werkstück 6 kann es sich beispielsweise um einen rohgeschmiedeten Stahlblock, eine Welle, etc. handeln, welcher/welche entlang seines/ihres Umfangs oder Länge von der Außen- oder Innenseite her geprüft wird. Das in Figur 1 gezeigte Beispiel ist nicht auf ein Werkstück 6 mit rauer Prüfoberfläche 4 beschränkt. Das im Folgenden beschriebene Verfahren ist ebenso bei Werkstücken 6 mit einer akustisch anisotropen Beschichtung, welche sich im Bereich der Prüfoberfläche 6 befindet, sowie auf Werkstücke mit einer grobkörnigen Struktur anwendbar.

In der ersten Position des Ultraschallprüfkopfes 2 (mit ungestrichenen Bezugszeichen versehen) wird der Ultraschallprüfpuls 12 an einem ersten Einkoppelpunkt 20 in das Werkstück 6 eingekoppelt. In der zweiten Position (mit gestrichenen Bezugszeichen versehen) wird der Ultraschallprüfpuls 12' an einem zweiten Einkoppelpunkt 20' in das Werkstück 6 eingekoppelt. Die beiden Einkoppelpunkte 20,20' trennt die in Richtung der Prüfoberfläche 4 des Werkstückes gemessene Prüfschrittweite 18.

Da die Prüfschrittweite 18 zwischen der in Figur 1 gezeigten ersten und zweiten Position des Ultraschallprüfkopfes 2,2' so gering gewählt ist, dass diese unterhalb eines in der gezeigten Prüfungsanordnung erreichbaren lateralen (d.h. in Richtung der Ausdehnung der Prüfoberfläche 4) Auflösungsvermögens des Ultraschallprüfkopfes 2,2' liegt, können die in der ersten bzw. zweiten Position des Ultraschallprüfkopfes 2,2' empfangenen Empfangssignale 14,14' einem gemeinsamen Ortspunkt 22 innerhalb des Werkstückes 6 zugeordnet werden. Die laterale Ortsauflösung der Messung ist durch die Breite B des in das Werkstück 6 eingekoppelten Ultraschallfeldes in der Tiefe des reflektierenden Fehlers 16 bestimmt. Das Ultraschallfeld ist in Figur 1 anhand seiner Grenzstrahlen 24,24' dargestellt. Mit anderen Worten: Im Werkstück vorhandene Reflektoren, wie z.B. der Fehler 16, welche innerhalb des Ultraschallfeldes eines Prüfpulses 12, 12' liegen, können in lateraler Richtung nicht getrennt voneinander erfasst werden. Als Ortspunkt 22 wird daher ein Punkt in der Mitte des Ultraschallfeldes angenommen. Bei dem in Figur 1 gezeigten Ortspunkt 22 handelt es sich um den der ersten Position des Ultraschallkopfes 2 zugeordneten ersten Ortspunkt.

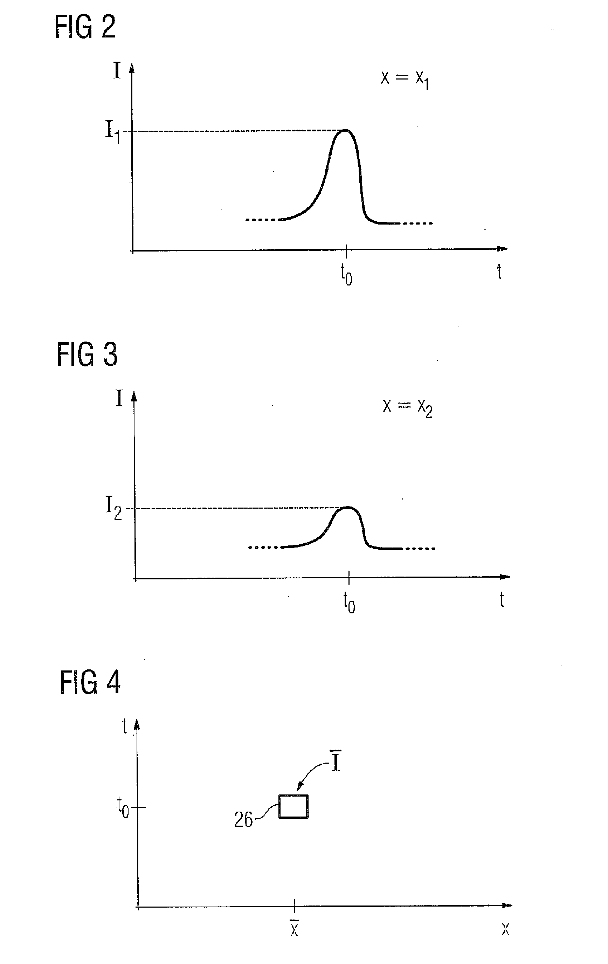

Das an der ersten Position des Ultraschallprüfkopfes 2, welche im Folgenden mit x₁ bezeichnet werden soll, von dem Empfangselement 10 empfangene Empfangssignal 14 ist als A-Bild in Figur 2 dargestellt. In Figur 2 ist die Intensität I über der Zeit t aufgetragen, welche der Tiefe entspricht. Die zum Zeitpunkt t₀, welcher der Tiefe des Fehlers 16 in dem Werkstück 6 entsprechend soll, gefundene Reflektion weist eine Intensität I₁ auf. Nachdem der Ultraschallprüfkopf 2' in seine zweite Position, welche im Folgenden mit X₂ bezeichnet werden soll, verschoben worden ist, weist das Empfangssignal 14' die Intensität I₂ auf. In Figur 3 ist das entsprechende A-Bild dargestellt.

In einem zugehörigen B-Bild, welches Figur 4 zeigt, wird die Intensität I der in den Empfangssignalen 14,14' gefundenen Reflektionen farb- bzw. intensitätscodiert dargestellt. Dabei wird die entsprechende Laufzeit t bzw. Tiefe für verschiedene Positionen x dargestellt. In Figur 4 ist beispielhaft ein Bildpunkt 26 dargestellt, dessen Farb- bzw. Grauwertintensität (aus Gründen der Klarheit nicht dargestellt) die Intensität *I̅* der an der Position *x̅* in der Tiefe t₀ gefundenen Reflektion entspricht. Im dargestellten Beispiel stammt diese Reflektion von dem in dem Werkstück vorhandenen Fehler 16. Da der Bildpunkt 26 auf der Basis mehrerer Empfangssignale 14,14' berechnet und dessen Ergebnis einem mittleren Ort zugewiesen wird, gilt beispielhaft für den Zeitpunkt t₀ die Ortsposition *x̅* = (*x*1+*x*2)/2 und die Intensität *I̅*=(*I*1+*I*2)/2. Da die diesem Messwert zu Grunde liegenden Empfangssignale auf Ultraschallprüfpulsen 12,12' basieren, welche an in Scanrichtung A nur geringfügig voneinander verschiedenen Einkoppelpunkten 20,20' in das Werkstück 6 eingekoppelt wurden, ist der Einfluss der Rauigkeit der Prüfoberfläche auf jedes der empfangenen Empfangssignale 14,14' geringfügig unterschiedlich. Durch die vorgenommene Mittelung über die Ortskoordinate x wird eine mittlere Intensität *I̅* zu für eine mittlere Ortskoordinate *x̅* berechnet. Durch diese Mittelung kann der Einfluss der Oberflächenrauigkeit auf das erzielte Messergebnis wesentlich verringert werden. Mit anderen Worten wird einem durch die Koordinaten *x̅* und t₀ bestimmten Ortspunkt 22 der Messwert *I̅* zugeordnet. In Figur 1 läge dieser Ortspunkt zwischen dem dargestellten, mittig zwischen den Grenzstrahlen 24 des Ultraschallfeldes des ersten Prüfpulses 12 in der Tiefe des Fehlers 16 gelegenen Ortspunkt 22 und einem weiteren in analoger Weise für die zweite Position des Ultraschallprüfkopfes 2' konstruierten weiteren Ortspunkt.

Die zuvor beispielhaft erläuterte Mittelwertbildung zweier Intensitäten I1 und 12 ist lediglich die einfachste Möglichkeit der Rauschunterdrückung. Zu einer weiteren Verbesserung führen sogenannte "Entropie Algorithmen", die auf dem Prinzip beruhen, dass die Entropie der Menge der gemessenen Informationen maximiert wird. Dies kann in sehr unterschiedlicher Weise formuliert werden, z.B. durch bestimmte Annahmen zur Diskretisierung der Ortsinformationen.

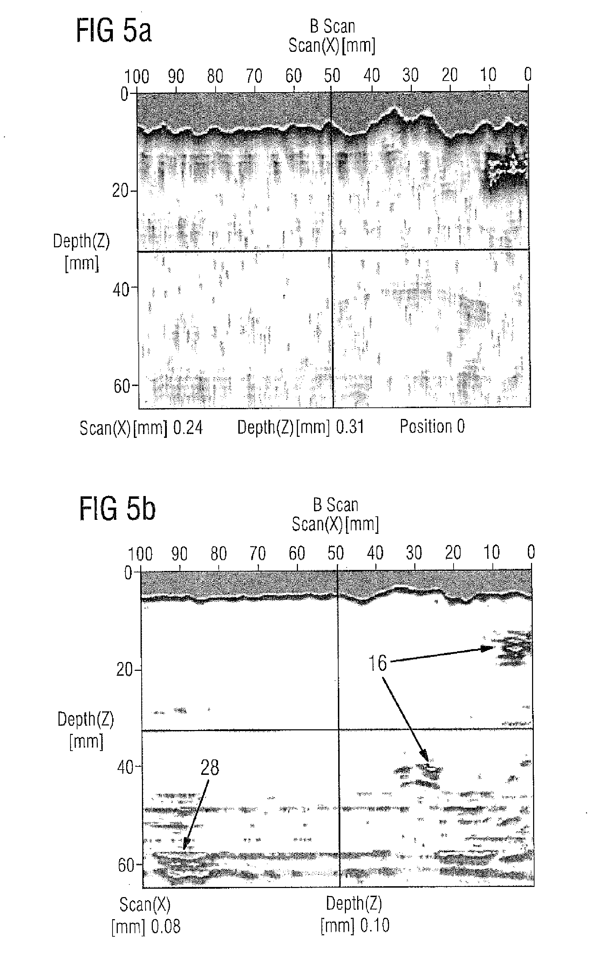

Figur 5a und b zeigen das Ergebnis einer unter realen Bedingungen an einem Prüfkörper durchgeführten Ultraschallprüfung. Dabei zeigt Figur 5a das Ergebnis einer herkömmlichen Messung. In Figur 5b ist das Ergebnis einer unter gleichen Bedingungen durchgeführten Messung dargestellt, für die jedoch das erfindungsgemäße Verfahren zum Einsatz kam. Augenfällig zeigt Figur 5b das wesentlich rauschärmere Bild. Dies wird insbesondere an dem im Vergleich zu Fig. 5a wesentlich geringeren, durch die Oberflächenrauigkeit bedingten Rauschen am oberen Bildrand deutlich. Außerdem zeigt Fig. 5a aufgrund der Tatsache, dass es sich um einen grobkörnigen Prüfkörper handelt ein starkes Rauschen sowie eine starke Dämpfung im Volumen. Aus diesem Grund ist in Fig. 5a kein Rückwandsignal zu finden. Durch Einsatz des erfindungsgemäßen Verfahrens ist in Fig. 5b ein Rückwandsignal 28 zu finden. Noch deutlicher wird die Wirkung des erfindungsgemäßen Verfahrens anhand der in den dargestellten Messungen vorhandenen Fehler 16. Während der im oberen Bereich der Figuren 5a und b vorhandene Fehler 16 auch in der konventionellen Messung (vgl. Figur 5a) noch erkennbar ist, ist der tiefer liegende Fehler 16 im unteren Teil von Fig. 5b ausschließlich mit Hilfe des erfindungsgemäßen Verfahrens sicher auffindbar.

## Patentansprüche

1. Verfahren zur Ultraschallprüfung eines Werkstückes (6), bei dem eine Vielzahl von Ultraschallprüfpulsen (12,12') von einer Prüfoberfläche (4) des Werkstückes (6) in dieses eingekoppelt wird, wobei zumindest zwei Ultraschallprüfpulse (12,12') an voneinander um eine entlang der Prüfoberfläche (4) gemessene Prüfschrittweite (18) beabstandeten Einkoppelpunkten (20,20') in das zu prüfende Werkstück (6) eingekoppelt werden, wobei ein einzelner einem in dem Werkstück (6) gelegenen Ortspunkt (22) zugeordneter Messwert (*I̅*) auf der Basis der den zumindest zwei Ultraschallprüfpulsen (12,12') zugeordneten Empfangssignalen (14,14') berechnet wird.

2. Verfahren zur Ultraschallprüfung nach Anspruch 1, bei dem die Ultraschallprüfung mit einem auf die Prüfoberfläche (4) aufgesetzten Ultraschallprüfkopf (2,2') erfolgt, und die Prüfschrittweite (18) kleiner als ein durch die Bauform des Ultraschallprüfkopfes (2,2') sowie dessen Betriebsparameter während der Ultraschallprüfung vorgegebenes laterales Ortsauflösungsvermögen gewählt wird.

3. Verfahren zur Ultraschallprüfung nach einem der vorstehenden Ansprüche, bei dem der Berechnung des Messwertes (*I̅*) eine statistische Auswertung der Empfangssignale (14,14') vorausgeht und bei der Berechnung des Messwertes (*I̅*) diejenigen Empfangssignale (14,14') unberücksichtigt bleiben, die einen im Rahmen der statistischen Auswertung bestimmten Grenzwert überschreiten.

4. Verfahren zur Ultraschallprüfung nach Anspruch 3, bei dem der Grenzwert ein Vielfaches der statistischen Standardabweichung ist.

5. Verfahren zur Ultraschallprüfung nach einem der vorstehenden Ansprüche, bei dem ein zur Ultraschallprüfung vorgesehener Ultraschallprüfkopf (2,2') zumindest in einer Zeitspanne zwischen der Einkopplung der zumindest zwei Ultraschallprüfpulse (12,12') entlang einer Abtastbahn (A) verfahren wird.

6. Verfahren zur Ultraschallprüfung nach Anspruch 5, bei dem ein in das Werkstück (6) eingekoppeltes Ultraschallfeld zumindest zweier aufeinander folgender Ultraschallprüfpulse (12,12') einander überlappen.

7. Verfahren zur Ultraschallprüfung nach Anspruch 6, bei dem die Ultraschallfelder einander um zumindest 10% überlappen.

8. Verfahren zur Ultraschallprüfung nach einem der Ansprüche 5 bis 7, bei dem der Messwert (*I̅*) basierend auf denjenigen Empfangssignalen (14,14') berechnet wird, welche in Abtastrichtung (A) aufeinander folgen.

9. Verfahren zur Ultraschallprüfung nach Anspruch 8, bei dem eine vorgegebene Anzahl von Empfangssignalen (14,14') zu einem Datenblock zusammengefasst wird.

10. Verfahren zur Ultraschallprüfung nach Anspruch 8, bei dem das jeweils aktuelle Empfangssignal (14,14') und eine vorgegebene Anzahl vorhergehender Empfangssignale (14,14') zu einem Datenblock zusammengefasst werden.

11. Verfahren zur Ultraschallprüfung nach Anspruch 10, bei dem die vorgegebene Anzahl der Empfangssignale (14,14') in Abhängigkeit von der Position des Ultraschallprüfkopfes (2,2') auf der Abtastbahn (A) verändert wird.

12. Verfahren zur Ultraschallprüfung nach einem der Ansprüche 4 bis 11, bei dem zur statistischen Auswertung der Empfangssignale (14,14') ein Maximum-Entropie-Algorithmus eingesetzt wird.

13. Vorrichtung zur Ultraschallprüfung umfassend einen Ultraschallkopf (2,2') und eine Steuer- und Auswerteeinheit zur Durchführung des Verfahrens nach einem der Ansprüche 1 bis 12.
